(19) Europäisches Patentamt / European Patent Office / Office européen des brevets

(11) **EP 2 808 701 A1**

(12) **EUROPEAN PATENT APPLICATION**

(43) Date of publication:
03.12.2014 Bulletin 2014/49

(51) Int Cl.:
*G01S 19/24* (2010.01)

(21) Application number: 14166289.0

(22) Date of filing: 29.04.2014

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 24.05.2013 CN 201310198812
05.03.2014 US 201414197673

(71) Applicant: **O2 Micro, Inc.**
**Santa Clara, CA 95054 (US)**

(72) Inventors:
• **Gao, Ke**
**610041 Chengdu (CN)**
• **Tang, Deyu**
**610041 Chengdu (CN)**
• **Lu, Shenghong**
**610041 Chengdu (CN)**

(74) Representative: **Lippert, Stachow & Partner Patentanwälte**
**Postfach 30 02 08**
**51412 Bergisch Gladbach (DE)**

(54) **Apparatus and methods for determining status of a tracking loop**

(57) A receiver associated with a positioning system is provided. The receiver comprises a tracking loop and a signal strength calculating module. The tracking loop is configured for tracking a positioning signal and generating an in-phase signal and a quadrature signal based on the positioning signal. The signal strength calculating module is configured for calculating a first evaluation value and a second evaluation value related to the positioning signal based on the in-phase signal and the quadrature signal, respectively, and determining a status of the tracking loop based on at least one of the first evaluation value and the second evaluation value.

FIG. 1

**Description**

RELATED APPLICATION

This Application claims priority to Patent Application Number 201310198812.7, filed on May 24, 2013 with State Intellectual Property Office of the P.R. China (SIPO), which is hereby incorporated by reference.

BACKGROUND

A signal from the Global Positioning System (GPS) system is a spread spectrum signal sent by a GPS satellite through the frequency of L1 (1575.42MHZ) or L2 (1227.60 MHz). A civilian GPS receiver usually employs the L1 frequency. Several signals sent by L1 carrier wave include coarse/acquisition (C/A) code, precise (P) code, and navigation data that includes detailed information about the satellite orbit. C/A code is a kind of pseudo random noise (PRN) code mainly used for civilian navigation. Every satellite has a unique C/A code that is repeatedly used. The C/A code is a binary sequence composed of 0 and 1. Every 0 or 1 is treated as a "chip". C/A code has a length of 1023 chips, and is transmitted at a rate of 1.023M chips per second. That is, the period of C/A code lasts 1 ms. As can be understood by a person skilled in the art, "chip" is a unit for data length or time length. Navigation data is also a binary sequence composed of 0 and 1, and is transmitted at a rate of 50 bits per second.

In order for positioning, a GPS receiver needs to capture signals sent from at least 4 satellites, and to demodulate the navigation data from 4 GPS signals. The GPS signals from different satellites are transmitted through different channels. Usually, a GPS receiver processes the GPS signals from several channels. A C/A code of a different GPS signal has a different starting time and a different Doppler frequency shift. Therefore, in order to search one specific satellite signal, the GPS receiver often conducts a two-dimensional search for every C/A code with different starting times at every possible frequency.

The GPS receiver includes an antenna, a radio frequency (RF) front-end, and a baseband processing unit. The GPS signal sent from a GPS satellite is received by the antenna, and then transmitted to the RF front-end. The RF front-end converts the RF signal received from the antenna to a signal with desired output frequency, and digitalizes the converted signal with a predetermined sampling frequency. The converted and digitalized signal can be treated as an intermediate-frequency signal. Then, the intermediate-frequency signal is transmitted to a capturing module in the baseband processing unit. The capturing module may search for the starting point of the C/A code, the frequency of the carrier wave, and especially the Doppler frequency shift of the GPS signal, using corresponding algorithms with the intermediate-frequency signal, local C/A code and local carrier wave. If the capturing module confirms the GPS signal has been captured, for example, the frequency error of the carrier wave is within 1 Hz and the phase error of the C/A code is within ½ chip, a tracking module in the baseband processing unit enters into a tracking status. While in tracking status, the local C/A code and local carrier wave can be utilized to track the variations of the C/A code and carrier wave of the GPS signal to acquire accurate C/A code phase shift and Doppler frequency shift. The tracking module includes a carrier-wave tracking loop and a C/A code tracking loop, configured for tracing the carrier-wave and C/A code of the GPS signal, respectively, to demodulate the navigation data carried by the GPS signal.

Because of various kinds of disturbances, a RF signal received from the antenna includes both useful signal and noise. The useful signal is the GPS signal sent from the GPS satellite to the receiver. The GPS signal can help the receiver to perform functions such as positioning.

During the process of tracking the GPS signal by the tracking loop, the tracking loop may become lost and unable to continue tracking the GPS signal, due to various factors (e.g., noises). Therefore, there is a need to determine the status of the tracking loop, e.g., to determine whether the tracking loop is locked or lost, so as to make timely adjustments to the tracking loop. If the tracking loop is locked, the tracked GPS signal can be utilized to acquire information such as the position and speed of the GPS receiver. If the tracking loop is lost, the GPS signal needs to be re-captured and tracked. Therefore, the GPS receiver needs to evaluate the GPS signal strength; determine whether the tracking loop is lost; and adjust the parameters of the tracking loop based on evaluated values of the GPS signal strength.

The signal strength can be measured by signal to noise ratio (SNR). SNR equals the power of the useful signal divided by the power of the noise, usually with a unit of decibel (DB). Generally speaking, when SNR has a higher value, the GPS signal is stronger. In that situation, the receiver is generally located in an outdoor and open area, so that the tracking loop is locked, and Doppler frequency shift and its change rate are relatively large. Otherwise, when the SNR has a lower value, the GPS signal is usually weaker. In that situation, the receiver is generally located in an indoor or signal-shielded area, so that the tracking loop is lost and Doppler frequency shift and its change rate are relatively small. However, in some circumstances, SNR cannot represent the real signal strength or the status of the tracking loop. For example, when the power of useful signal and power of noise signal are both small, SNR can have a high value, which makes the GPS signal appear to be strong. Therefore, a lost status of the tracking loop cannot be determined timely and effectively in such circumstances. Thus, there exists a need for apparatus and methods for determining a status of a tracking loop, without the above discussed drawbacks.

## SUMMARY

In some embodiments according to the present teaching, a receiver associated with a positioning system is provided. The receiver comprises a tracking loop and a signal strength calculating module. The tracking loop is configured for tracking a positioning signal and generating an in-phase signal and a quadrature signal based on the positioning signal. The signal strength calculating module is configured for calculating a first evaluation value and a second evaluation value related to the positioning signal based on the in-phase signal and the quadrature signal, respectively, and determining a status of the tracking loop based on at least one of the first evaluation value and the second evaluation value. Further, the positioning system associated with the receiver may comprise a Global Positioning System (GPS) system; and the positioning signal may comprise a GPS signal.

In some embodiments according to the present teaching, a method, implemented on a machine having at least one processor, storage, and a communication platform connected to a network for determining a status of a tracking loop associated with a positioning system is disclosed. A positioning signal associated with the positioning system is first received. An in-phase signal and a quadrature signal are generated based on the positioning signal. A first evaluation value and a second evaluation value are then generated based on the in-phase signal and the quadrature signal, respectively. The status of the tracking loop is determined based on at least one of the first evaluation value and the second evaluation value.

Further, said method may further comprising: filtering the first evaluation value and the second evaluation value.

## BRIEF DESCRIPTION OF THE DRAWINGS

Features and benefits of embodiments of the claimed subject matter will become apparent as the following detailed description proceeds, and upon reference to the drawings, wherein like numerals depict like parts, and in which:

FIG. 1 illustrates a block diagram of a GPS receiver, in an embodiment according to the present teaching.

FIG. 2 illustrates a block diagram of a signal strength calculating module, in an embodiment according to the present teaching.

FIG. 3 illustrates a flowchart of examples of operations performed by a state machine to determine the status of a tracking loop, in an embodiment according to the present teaching.

## DETAILED DESCRIPTION

Reference will now be made in detail to the embodiments of the present teaching. While the disclosure will be described in conjunction with these embodiments, it will be understood that they are not intended to limit the disclosure to these embodiments. On the contrary, the disclosure is intended to cover alternatives, modifications and equivalents, which may be included within the spirit and scope of the disclosure as defined by the appended claims.

Furthermore, in the following detailed description of the present teaching, numerous specific details are set forth in order to provide a thorough understanding of the present teaching. However, it will be recognized by one of ordinary skill in the art that the present teaching may be practiced without these specific details. In other instances, well known methods, procedures, components, and circuits have not been described in detail as not to unnecessarily obscure aspects of the present teaching.

Embodiments in accordance with the present teaching pertain to apparatus (e.g., GPS receivers) and methods for determining a status of a tracking loop associated with a positioning system, e.g., a GPS system. In one embodiment, a GPS receiver receives a GPS signal and converts the GPS signal to an intermediate-frequency signal. The GPS receiver includes a tracking loop and a signal strength calculating module. The tracking loop may conduct a real-time tracking of carrier wave and PRN code of the GPS signal to obtain local carrier wave and local PRN code and to demodulate navigation data carried by the GPS signal. Then, the tracking loop may generate an in-phase signal and a quadrature signal based on the intermediate-frequency signal, local PRN code, and local carrier wave. The signal strength calculating module calculates a first evaluation value and a second evaluation value related to the GPS signal based on the in-phase signal and the quadrature signal, and determines a status of the tracking loop based on the first evaluation value and the second evaluation value. In accordance with various embodiments of the present teaching, the signal strength calculating module determines the status of the tracking loop not only based on SNR, but also directly based on the first evaluation value. Therefore, the GPS receiver in accordance with embodiments of the present teaching can improve the accuracy for determining the status of the tracking loop, especially in a situation when SNR cannot represent

EP 2 808 701 A1

the real signal strength and the status of the tracking loop, e.g., when both the useful signal power and noise power are small while SNR is big.

The GPS receiver, in an embodiment, includes a RF front-end and a baseband processing unit. The RF front-end converts the GPS signal to a signal with desired output frequency, and digitalizes the converted signal at a predetermined sampling frequency. The converted and digitalized signal is regarded as an intermediate-frequency signal. The intermediate-frequency signal is then transmitted to a capturing module in the baseband processing unit. The capturing module captures the starting point of the C/A code, the frequency of the carrier wave, and especially Doppler frequency shift of the GPS signal. If the capturing module determines that the GPS signal has been captured, a tracking module in the baseband processing unit enters into a tracking mode to form a tracking loop. In one embodiment, the structures and functions of the RF front-end and capturing module can be the same as those in a conventional GPS receiver. For the sake of briefness, it is unnecessary to go into details here.

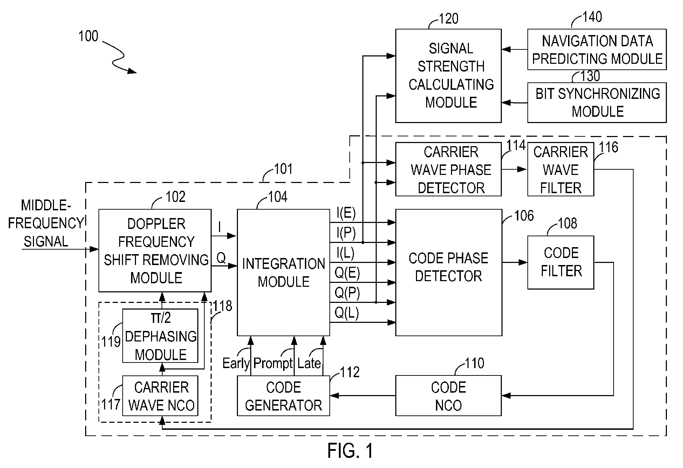

FIG. 1 illustrates a block diagram of a GPS receiver 100, in an embodiment according to the present teaching. In the GPS receiver 100, the GPS signal has been converted to an intermediate-frequency signal by the RF front-end, and input into a tracking loop 101. Tracking loop 101 includes a carrier-wave tracking loop and a C/A code tracking loop, configured for conducting real-time tracking for the carrier wave and C/A code of the GPS signal in the current channel, respectively, to demodulate the navigation data contained in the GPS signal. As illustrated in FIG. 1, the C/A code tracking loop can be an early-late phase-locked loop, and comprises an integration module 104, a code phase detector 106, a code filter 108, a code numerical controlled oscillator (NCO) 110, and a code generator 112. Based on the C/A code phase shift output from the capturing module, code generator 112 generates two signals with a predetermined phase difference, e.g., an early C/A code and a late C/A code. The predetermined phase difference can be set to one chip. The early C/A code, the late C/A code and the input intermediate-frequency signal are calculated in integration module 104 to generate and output two signals. The two signals are processed by code phase detector 106 and code filter 108 to generate a control signal for regulating a clock signal generated by code NCO 110. In this manner, the rate of generating local C/A code by the code generator 112 is controlled, and the phase of the local C/A code and the phase of the GPS signal received are kept the same. In that case, the local C/A code is prompt C/A code provided to the carrier wave tracking loop.

The carrier wave tracking loop includes Doppler frequency shift removing module 102, integration module 104, a carrier wave phase detector 112, a carrier wave filter 116, and a local carrier wave generator 118. Local carrier wave generator 118 generates a local carrier wave based on the Doppler frequency shift output from the capturing module. Local carrier wave generator 118 includes a $\pi/2$ dephasing module 119 and a carrier wave NCO 117. Doppler frequency shift removing module 102 utilizes the local carrier wave output from local carrier wave generator 118 to convert the intermediate-frequency signal to a baseband signal, and to get an in-phase component I and a quadrature component Q of the baseband signal. Local carrier wave generator 118 outputs two local quadrature carrier wave signals including a sine signal and a cosine signal. One of these two carrier wave signals is generated by carrier wave NCO 117 and referred to as a first local reference signal. The other carrier wave signal is generated by dephasing the first local reference signal and referred to as a second local reference signal. The dephasing operation is performed by $\pi/2$ dephasing module 119. In-phase component I and quadrature component Q are integrated with the prompt C/A code in integration module 104, respectively. Integration module 104's output is processed by carrier wave phase detector 114 and carrier wave filter 116 to generate a control signal to regulate the frequency of carrier wave NCO 117, and to generate a local carrier wave synchronized with the carrier wave in the GPS signal.

It can be understood by one skilled in the art that integration module 104 performs the integration function to the corresponding signals in the carrier wave tracking loop and the C/A code tracking loop. Integration module 104 in FIG. 1 is only for the purpose of illustration in one embodiment. In another embodiment of the present teaching, two integration modules can be utilized to perform integrations to the carrier wave tracking loop and the C/A code tracking loop, respectively.

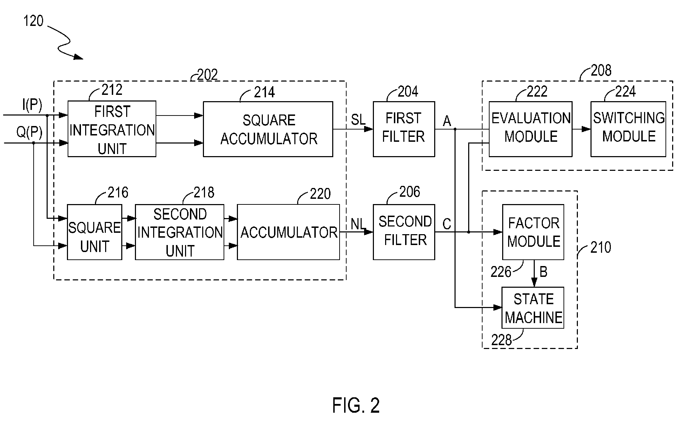

GPS receiver 100 further includes a signal strength calculating module 120 configured for evaluating the GSP signal strength, in the tracking stage. As mentioned above, the GPS signal is converted to an intermediate-frequency signal by the RF front-end, and then input into tracking loop 101. The GPS signal is then converted to a baseband signal by Doppler frequency shift removing module 102 to obtain in-phase component I and quadrature component Q. Integration module 104 performs related calculation for in-phase component I and quadrature component Q with the prompt C/A code in a predetermined period of time, respectively. In one embodiment, integration module 104 performs integrations for in-phase component I and for quadrature component Q, so as to generate an in-phase signal I(P) and a quadrature signal Q(P), respectively, as input to signal strength calculating module 120. In one embodiment, signal strength calculating module 120 calculates a first evaluation value SL and a second evaluation value NL related to the GPS signal based on in-phase signal I(P) and quadrature signal Q(P), respectively. Accordingly, SNR is calculated so as to determine the GPS signal strength and a status of the tracking loop. In one embodiment, signal strength calculating module 120 further determines the GPS signal strength and a status of the tracking loop directly based on first evaluation value SL. For example, when first evaluation value SL is kept smaller than a first predetermined level for a certain period, which means both the useful signal and the noise in the GPS signal are very weak, signal strength calculating module 120 directly determines that the tracking loop is lost, regardless of the value of SNR. The operation of signal strength calculating module 120 will be further described in relation to FIG. 2.

In accordance with various embodiments of the present teaching, signal strength calculating module 120 determines the status of the tracking loop based on SNR, and also based directly on first evaluation value SL. Therefore, when first evaluation value SL is kept smaller than a first predetermined level for a certain period of time, signal strength calculating module 120 determines that the tracking loop is lost. In this way, GPS receiver 100 can accurately determine the status of the tracking loop, especially in a situation when SNR cannot represent the signal strength and the loop status, e.g., when both the useful signal power and noise signal power are small while SNR is big. Thus, the accuracy of GPS receiver 100 for determining the status of the tracking loop is improved.

FIG. 2 illustrates a block diagram of signal strength calculating module 120 shown in FIG. 1, in an embodiment according to the present teaching. Signal strength calculating module 120 evaluates the GPS signal strength based on the equation shown below.

$$\begin{cases} SL = \left( \sum_{i=1}^{M} I_i \right)^2 + \left( \sum_{i=1}^{M} Q_i \right)^2 \\ NL = \sum_{i=1}^{M} (I_i^2 + Q_i^2) \end{cases} \tag{1}$$

In this equation, M is the integration time for the in-phase signal and the quadrature signal. First evaluation value SL and second evaluation value NL are in a non-linear relationship. Each of the first evaluation value and the second evaluation value contains influences from both useful signals and noise.

In one embodiment, signal strength calculating module 120 includes a calculating module 202, a first filter 204, a second filter 206, a loop parameter setting module 208, and a loop status determining module 210. Calculating module 202 calculates first evaluation value SL and second evaluation value NL related to the GPS signal based on in-phase signal I(P) and quadrature signal Q(P). First filter 204 and second filter 206 filter first evaluation value SL and second evaluation value NL, respectively, and accordingly generate filtered evaluation values including a first evaluation value A and a second evaluation value C. Loop status determining module 210 determines whether the tracking loop is locked or lost according to first evaluation value A and second evaluation value C. In addition, loop parameter setting module 208 sets the parameters for the tracking loop, e.g., loop bandwidth and integration time, according to first evaluation value A and second evaluation value C.

In one embodiment, calculating module 202 includes a first integration unit 212, a square accumulator 214, a square unit 216, a second integration unit 218, and an accumulator 220. According to the equation (1), first integration unit 212 integrates in-phase signal I(P) and quadrature signal Q(P) over a predetermined time period. Then, square accumulator 214 squares the integration results of in-phase signal I(P) and quadrature signal Q(P) output from first integration unit 212, and accumulates the squared results to generate first evaluation value SL related to the GPS signal.

Square unit 210 squares in-phase signal I(P) and quadrature signal Q(P). Then, second integration unit 218 performs integrations to in-phase signal I(P) square and quadrature signal Q(P) square in a predetermined time length M. Accumulator 220 then adds the integration results output from second integral unit 218 to generate second evaluation value NL related to the GPS signal.

Integration time M in the above equation (1) can be flexibly set according to the signal strength. When the signal strength is strong, integration time M can be set to a smaller value; when the signal strength is weak, integration time M can be set to a larger value. However, since the navigation data in the GPS signal may flip bit symbol every 20ms, the integration time cannot be too long. Otherwise, there is SNR loss caused by bit symbol flipping. The integration time is usually set to 20ms. A complete frame of the GPS navigation data in the GPS signal contains 1500 bits of data, and is composed of 5 sub-frames. Most bits of every sub-frame have a good predictability and a good repeatability with small variations in frequency. Therefore, as illustrated in FIG. 1, according to the navigation data previously received from one satellite, navigation bit predicting module 140 in GPS receiver 100 can predict the navigation data in the GPS signal sent from the same satellite in a future moment. The predicted navigation data is multiplied by the intermediate-frequency signal to remove the navigation data contained in the intermediate-frequency signal, so that SNR loss caused by bit symbol flipping is removed, and integration over a time period longer than 20 ms for the intermediate-frequency signal can be realized. Thus, with the assistance of navigation bit predicting module 140, integration time M can be dynamically configured according to the application environment. The value of M can be set larger than 20ms to improve the loop detecting sensitivity. When there is no assistance of navigation bit predicting module 140, M can be flexibly configured according to different application systems. For example, integration time M for a GPS system can be configured to 20ms, while M for a wide area augmentation system (WAAS) can be configured to 2ms.

When there is a cold boot on GPS receiver 100, bit synchronizing module 130 in GPS receiver 100 is configured for detecting the navigation bit boundaries before signal strength calculating module 120 is started, to determine a starting point for the intermediate-frequency signal integration in signal strength calculating module 120. For other starting modes such as a hot boot, GPS receiver 100 can record the bit boundaries before the hot boot, and directly use signal strength calculating module 120 to calculate the GPS signal strength without starting bit synchronizing module 130.

As illustrated in FIG. 2, there may be some jitters in the GPS signal's first evaluation value SL and second evaluation value NL evaluated by signal strength calculating module 120, due to noise. First evaluation value SL and second evaluation value NL can pass first filter 204 and second filter 206 respectively to obtain smoother filtered results. The filtered result of first evaluation value SL is referred to as A and the filtered result of second evaluation value NL is referred to as C. In one embodiment, each of first filter 204 and second filter 206 is a first order infinite impulse response (IIR) low pass filter (LPF). However, it can be understood by one skilled in the art that first filter 204 and second filter 206 can utilize other LPFs or averaging filters. The transmission function of the IIF LPF is shown below,

$$H(z) = \frac{\alpha}{1 - (1 - \alpha)z^{-1}}.$$ (2)

The parameters of the filter can be flexibly set by software to fit different application systems. For example, for a GPS system, since the period for a navigation bit is long, integration time M is set to 20ms, and the parameter $\alpha$ can be relatively large, e.g., 0.1, so that the response speed of the filter is improved as much as possible while achieving the smoother filtered results. For a WAAS system, since the period for a navigation bit is small, M is set to 2ms, and the parameter $\alpha$ can be relatively small, e.g., 0.001, so as to make the filtered results as smooth as possible while guaranteeing the response speed of the filter.

In one embodiment, loop status determining module 210 includes a factor module 226 and a state machine 228. When first evaluation value A is kept to be less than a first threshold for a certain period of time, state machine 228 determines that the tracking loop is lost. Factor module 226 multiplies second evaluation C by a factor to generate a third evaluation value B. In one embodiment, the factor can be set equal to a second threshold TH2. When a ratio between first evaluation A and second evaluation C is greater than second threshold TH2, that is, first evaluation value A is higher than third evaluation value B, state machine 228 determines that the tracking loop is locked.

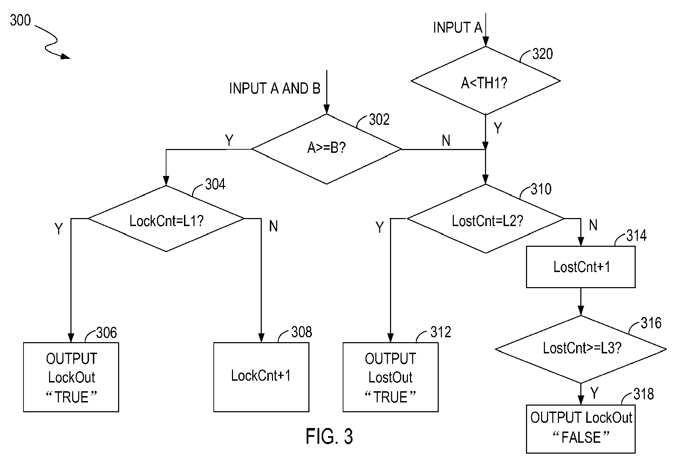

The operation of state machine 228 will be further described in relation to FIG. 3. Relative to a method of directly comparing second threshold TH2 with a ratio between first evaluation A and the second evaluation value C, the method implemented on loop status determining module 210 of the present teaching saves hardware resources. In one embodiment, the factor (e.g., second threshold TH2) and integration time M can be flexibly configured based on system type (e.g., a GPS or WAAS system). When the system type and integration time M are determined, the factor can be a constant.

Loop status determining module 210 determines the GPS signal strength and the status of the tracking loop based on first evaluation value A and second evaluation value C. State machine 228 compares first evaluation value A with first threshold TH1, and further compares first evaluation value A with third evaluation value B, and determines the status of the tracking loop based on the comparison results. In accordance with various embodiments of the present teaching, state machine 228 compares first evaluation value A with first threshold TH1, which is equivalent to comparing first evaluation SL and the first predetermined level. This can be very helpful in a situation when both useful signal and noise are very weak such that SNR cannot represent real signal strength.

In one embodiment, loop parameter setting module 208 includes an evaluating module 222 and a switching module 224. Evaluating module 222 divides first evaluation value A by second evaluation value C to generate a ratio between first evaluation A and second evaluation value C. The ratio between first evaluation A and second evaluation value C has a non-linear relationship with SNR. A bigger ratio corresponds to a larger SNR. Thus, the ratio between first evaluation A and second evaluation value C can indirectly represent the strength of a GPS signal in the current tracking channel. Switching module 224 sets real-time parameter of the tracking loop according to the current GPS signal strength. In one embodiment, GPS receiver 100 may further includes a database module with a pre-set table. In such a table, different tracking loop parameters are correspondingly set for different signal strength scope.

Generally, when the GPS receiver is located in an open area, the signal strength is strong. In order to respond to a sufficiently high dynamic stress when Doppler frequency shift and its change rate are big, the dynamic scope of the tracking loop should be reduced. Thus, a wider loop bandwidth and a shorter integration time should be set. When the GPS receiver is located in an indoor or half-sheltered area, the signal strength is weak, and Doppler frequency shift and its change rate are small. Thus, a smaller loop bandwidth and a longer integration time should be set to expand the dynamic scope of the tracking loop. Therefore, switching module 224 selects a set of corresponding parameters from the pre-set table according to the ratio between the first evaluation value A and the third evaluation value C indicating the GPS signal strength, and switches the set of parameters for the tracking loop.

FIG. 3 illustrates a flowchart of examples of operations performed by a state machine to determine the status of a tracking loop, in an embodiment according to the present teaching. FIG. 3 can be described in combination with FIG. 1 and FIG. 2. Although specific steps are disclosed in FIG. 3, such steps are examples. That is, the present teaching is well suited to performing various other steps or variations of the steps recited in FIG. 3.

In one embodiment, state machine 228 uses first evaluation value A and third evaluation value B to determine the status of the tracking loop. In the meanwhile, state machine 228 uses first evaluation value A to directly determine the status of the tracking loop. In one embodiment, state machine 228 includes three limits: a first limit L1, a second limit L2 and a third limit L3, wherein second limit L2 is larger than third limit L3.

State machine 228 further includes a first counter LockCnt and a second counter LostCnt. First counter LockCnt is configured for counting the number when the GPS signal strength is higher than second threshold TH2. Second counter LostCnt is configured for counting the number when the GPS signal strength is less than second threshold TH2 and when first evaluation value A is less than first threshold TH1. In one embodiment, first counter LockCnt and second counter LostCnt are initially set to zero. When the value in the counters reaches one of the three limits (first limit L1, second limit L2, or third limit L3), the tracking loop enters into a corresponding status. State machine 228 outputs two output signals indicating current status of the tracking loop: lock output signal LockOut and lost output signal LostOut, with an initial value of FALSE. Specifically, steps are included as below, in an embodiment of the present teaching.

In step 302, first evaluation value A and third evaluation value B are compared to determine whether or not first evaluation value A is greater or equal to third evaluation value B. The process will proceed to step 304 if first evaluation value A is greater than or equal to third evaluation value B. The process will proceed to step 310 if first evaluation value A is less than third evaluation value B.

In step 304, the value in first counter LockCnt and first limit L1 are compared to determine whether the value in first counter LockCnt is equal to first limit L1. The process will proceed to step 306 if the value in first counter LockCnt is equal to first limit L1. The process will proceed to step 308 if the value in first counter LockCnt is less than first limit L1.

In step 306, a locked loop is indicated if lock output signal LockOut is TRUE. The tracking channel enters into a locked mode; and the process ends.

In step 308, the value of first counter LockCnt is increased by 1; and the process ends.

In step 310, the value of second counter LostCnt is compared with second limit L2 to determine whether the value of second counter LostCnt is equal to second limit L2. The process will proceed to step 312 if the value of second counter LostCnt is equal to second limit L2. The process will proceed to step 314 if the value of second counter LostCnt is less than second limit L2.

In step 312, a completely lost loop is indicated by setting lost output signal LostOut as TRUE. Resetting the tracking channel is needed to recapture and track the GPS signal. The process ends.

In step 314, the value of second counter LostCnt is increased by 1. The process will proceed to step 316.

In step 316, whether or not the value of second counter LostCnt is greater than or equal to third limit L3 is determined. The process will proceed to step 318 if the value of second counter LostCnt is greater than or equal to third limit L3.

In step 318, it is indicated that the tracking channel enters into a status maintaining mode by outputting lock output signal LockOut as FALSE. The channel cannot continue to be used for positioning while resetting the channel is not needed. The process ends.

In one embodiment, step 302 and step 320 can be performed simultaneously.

In step 320, first evaluation value A and first threshold TH1 are compared to determine whether first evaluation value A is less than first threshold TH1. The process will proceed to step 310 if first evaluation value A is less than first threshold TH1. It is unnecessary to go into details for the operation after step 310, because they have been discussed before.

In another embodiment, the process will proceed to step 302 if first evaluation value A is not less than first threshold TH1 at 320.

In accordance with various embodiments of the present teaching, state machine 228 compares first evaluation value A with third evaluation value B to evaluate SNR of the GPS signal. Accordingly state machine 228 determines the GPS signal strength and the status of the tracking loop. State machine 228 further compares first evaluation value A with first threshold TH1 to directly detect first evaluation value SL related to GPS signal strength. When first evaluation A is less than first threshold TH1, that is, first evaluation value SL is less than the first predetermined level, it is indicated that both useful signal and noise signal are very weak. State machine 228 proceeds to step 310 to avoid a misjudgment caused in a situation when both first evaluation value SL and second evaluation value NL are small while SNR is large. The accuracy of determining the status of the tracking loop by the receiver is thus improved.

As discussed above, three modes for the tracking loop are defined by state machine 228 based on the GPS signal strength: a locked mode, a lost-recapturing mode, and a status maintaining mode. When the tracking loop is in the locked mode, the tracking channel can be involved in the operation of navigating output. When the tracking loop is in the lost-recapturing mode, it is indicated that the tracking channel is lost, and resetting for recapturing is needed. When the tracking loop is in the status maintaining mode, the tracking channel cannot be involved in the operation of navigating output, but resetting is not needed. This status maintaining mode has benefits for a quick-restoring of the system. For example, when a car equipped with a GPS receiver passes through a tunnel, the GPS signal becomes weak and the tracking loop is unable to track the GPS signal temporarily. The tracking channel can operate in the status maintaining mode while signal strength calculating module 120 continuously detects the GPS signal strength. Once the signal strength is restored, e.g., when the car exits the tunnel, this tracking channel can again be utilized to track the GPS signal. Thus, the time for recapturing and tracking is saved, which is beneficial for quickly restoring the system.

State machine 228 can be realized by the specific hardware or by software. When it is realized by software, the hardware complexity is reduced while a great flexibility is provided. For example, parameter L1, L2 and L3 in state machine 228 can be flexibly configured according to specific application, to reduce as much as possible the time needed for status detecting while maintaining a solid detection probability of the status detecting. The update time of state machine 228 can be updated once every integration time M (e.g., 20ms), or updated by sampling once every N*M (N is an integer). By using such sampling, the system operation speed can be effectively reduced. The update time herein refers to a time, e.g., integration time M or M multiplied by N, needed by state machine 228, before state machine 228 determines the status of the tracking loop, even when signal strength calculating module 120 continuously calculates the GPS signal strength.

While the foregoing description and drawings represent embodiments of the present teaching, it will be understood that various additions, modifications and substitutions may be made therein without departing from the spirit and scope of the principles of the present teaching as defined in the accompanying claims. One skilled in the art will appreciate that the disclosure may be used with many modifications of form, structure, arrangement, proportions, materials, elements, and components and otherwise, used in the practice of the disclosure, which are particularly adapted to specific environments and operative requirements without departing from the principles of the present teaching. The presently disclosed embodiments are therefore to be considered in all respects as illustrative and not restrictive, the scope of the disclosure being indicated by the appended claims and their legal equivalents, and not limited to the foregoing description.

**Claims**

1.  A receiver associated with a positioning system, comprising:

    a tracking loop configured for
    tracking a positioning signal associated with the positioning system, and
    generating an in-phase signal and a quadrature signal based on the positioning signal; and
    a signal strength calculating module configured for
    determining a first evaluation value related to the positioning signal based on the in-phase signal,
    determining a second evaluation value related to the positioning signal based on the quadrature signal, and
    determining a status of the tracking loop based on at least one of the first evaluation value and the second evaluation value.

2.  The receiver of claim 1, further comprising a front-end configured for converting the positioning signal to an intermediate-frequency signal, wherein:

    tracking the positioning signal includes conducting a real-time tracking of carrier wave and pseudo random noise (PRN) code of the positioning signal to obtain local carrier wave and local PRN code; and
    the in-phase signal and the quadrature signal are generated based on the intermediate-frequency signal, the local carrier wave, and the local PRN code.

3.  The receiver of claim 1 or 2, wherein the signal strength calculating module comprises a loop status determining module configured for:

    multiplying the second evaluation value by a factor to generate a third evaluation value;
    generating a first comparison result by comparing the first evaluation value with the third evaluation value;
    generating a second comparison result by comparing the first evaluation value with a first threshold; and
    determining the status of the tracking loop based on at least one of the first comparison result and the second comparison result.

4. The receiver of claim 3, wherein the loop status determining module comprises a state machine configured for receiving the first evaluation value and the third evaluation value; comparing a value in a first counter with a first limit if the first evaluation value is greater than or equal to the third evaluation value; comparing a value in a second counter with a second limit if the first evaluation value is less than the third evaluation value; and comparing the value in the second counter with the second limit if the first evaluation value is less than the first threshold.

5. The receiver of claim 4, wherein the state machine is configured for:

   outputting a first output signal indicating the tracking loop is locked if the value in the first counter is equal to the first limit; and
   outputting a second output signal indicating the tracking loop is lost if the value in the second counter is equal to the second limit.

6. The receiver of claim 4 or 5, wherein the state machine is configured for increasing the value in the first counter by one if the value in the first counter is less than the first limit.

7. The receiver of one of claims 4 to 6, wherein the state machine is further configured for:

   increasing the value in the second counter by one if the value in the second counter is less than the second limit;
   comparing the value in the second counter with a third limit, wherein the third limit is less than the second limit; and
   outputting a third output signal indicating the tracking loop is maintained if the value in the second counter is greater than or equal to the third limit.

8. The receiver of one of claims 4 to 7, wherein the value in the first counter and the value in the second counter are pre-set to zero.

9. The receiver of one of claims 1 to 8, wherein the signal strength calculating module comprises:

   a first integration unit configured for integrating the in-phase signal and the quadrature signal in a predetermined period of time;
   a square accumulator configured for squaring integration results from the first integration unit to generate first squared results, and for accumulating the first squared results to generate the first evaluation value;
   a square unit configured for squaring the in-phase signal and the quadrature signal to generate second squared results;
   a second integration unit configured for integrating the second squared results in the predetermined period of time; and
   an accumulator configured for accumulating integration results from the second integration unit to generate the second evaluation value.

10. The receiver of claim 9, wherein the signal strength calculating module further comprises a loop parameter setting module configured for setting parameters for the tracking loop according to the first evaluation value and the second evaluation value.

11. The receiver of claim 9 or 10, wherein the signal strength calculating module further comprises a first filter and a second filter configured for filtering the first evaluation value and the second evaluation value.

12. The receiver of one of claims 1 to 11, wherein the tracking loop includes a PRN code tracking loop configured for generating the local PRN code, wherein the local PRN code is in same phase with PRN code of the positioning signal.

13. A method, implemented on a machine having at least one processor, storage, and a communication platform connected to a network for determining a status of a tracking loop associated with a positioning system, comprising:

   receiving a positioning signal associated with the positioning system;
   generating an in-phase signal and a quadrature signal based on the positioning signal;

generating a first evaluation value based on the in-phase signal;
generating a second evaluation value based on the quadrature signal; and
determining the status of the tracking loop based on at least one of the first evaluation value and the second evaluation value.

14. The method of claim 13, further comprising converting the positioning signal to an intermediate frequency signal, wherein:

the positioning system comprises GPS system;
the positioning signal comprises GPS signal; and
the in-phase signal and the quadrature signal are generated based on the intermediate-frequency signal.

15. The method of claim 13 or 14, further comprising:

comparing the first evaluation value with a first threshold;
comparing a value in a second counter with a second limit if the first evaluation value is less than the first threshold;
multiplying the second evaluation value by a factor to generate a third evaluation value;
comparing the first evaluation value and the third evaluation value;
comparing a value in a first counter with a first limit if the first evaluation value is greater than or equal to the third evaluation value; and
comparing a value in a second counter with a second limit if the first evaluation value is less than the third evaluation value.

16. The method of claim 15, further comprising:

outputting a first output signal indicating the tracking loop is locked if the value in the first counter is equal to the first limit; and
increasing the value in the first counter by one if the value in the first counter is less than the first limit.

17. The method of claim 15 or 16, further comprising:

outputting a second output signal indicating the tracking loop is lost if the value in the second counter is equal to the second limit.

18. The method of claim 15, 16 or 17, further comprising:

increasing the value in the second counter by one if the value in the second counter is less than the second limit;
comparing the value in the second counter with a third limit, wherein the third limit is less than the second limit; and
outputting a third output signal indicating the tracking loop is maintained if the value in the second counter is greater than or equal to the third limit.

19. The method of one of claims 15 to 18, wherein the value in the first counter and the value in the second counter are pre-set to zero.

20. The method of one of claims 13 to 19, further comprising:

determining the first evaluation value and the second evaluation value according to the following equation

$$\begin{cases} SL = \left( \sum_{i=1}^{M} I_i \right)^2 + \left( \sum_{i=1}^{M} Q_i \right)^2 \\ NL = \sum_{i=1}^{M} (I_i^2 + Q_i^2) \end{cases}$$

wherein SL and NL represent the first evaluation value and the second evaluation value, respectively; Ii and Qi

represent the in-phase signal and the quadrature signal, respectively; M represents integration time.

21. The method of one of claims 13 to 20, further comprising:

dividing the first evaluation value by the second evaluation value to set parameters for the tracking loop.

FIG. 1

FIG. 2

FIG. 3

Europäisches
Patentamt

European
Patent Office

Office européen
des brevets

## EUROPEAN SEARCH REPORT

**Application Number**

EP 14 16 6289

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 007 020 A2 (O2MICRO INC [US]) 24 December 2008 (2008-12-24) * figures 1-3 * * paragraph [0016] - paragraph [0030] * | 1-21 | INV. G01S19/24 |
| X | BALAEI A T ET AL: "A Novel Approach in Detection and Characterization of CW Interference of GPS Signal Using Receiver Estimation of C/No", PLANS 2006 - PROCEEDINGS OF IEEE/ION PLANS 2006, THE INSTITUTE OF NAVIGATION, 8551 RIXLEW LANE SUITE 360 MANASSAS, VA 20109, USA, 27 April 2006 (2006-04-27), pages 1120-1126, XP056006412, * figure 5 * * pages 1121-1123, sections III ad IV * | 1-3, 9-14,20, 21 | |
| X | PARKINSON B W ET AL: "Global Positioning System: Theory and Applications, GPS Receivers", 1 January 1994 (1994-01-01), GLOBAL POSITIONING SYSTEM: THEORY AND APPLICATIONS; [PROGRESS IN ASTRONAUTICS AND AERONAUTICS VOL. 163], WASHINGTON, DC : AIAA, US, PAGE(S) 329 - 407, XP002294877, ISBN: 978-1-56347-106-3 * pages 390-392, section G.1 * | 1-3, 9-14,20, 21 | TECHNICAL FIELDS SEARCHED (IPC) G01S |
| A | US 2003/201935 A1 (KING THOMAS M [US] ET AL) 30 October 2003 (2003-10-30) * figures 2,4 * | 1-21 | |

The present search report has been drawn up for all claims

| Place of search | Date of completion of the search | Examiner |
|---|---|---|
| Munich | 21 October 2014 | Hekmat, Taymoor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 16 6289

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2014

| Patent document cited in search report | Publication date | Patent family member(s) | Publication date |
|---|---|---|---|
| EP 2007020 A2 | 24-12-2008 | EP 2007020 A2 <br> JP 4801032 B2 <br> JP 2009005327 A <br> KR 20080112894 A <br> TW 200915748 A <br> US 2008317101 A1 | 24-12-2008 <br> 26-10-2011 <br> 08-01-2009 <br> 26-12-2008 <br> 01-04-2009 <br> 25-12-2008 |
| US 2003201935 A1 | 30-10-2003 | AU 2003222007 A1 <br> CN 1650187 A <br> KR 20040102195 A <br> US 2003201935 A1 <br> WO 03093858 A2 | 17-11-2003 <br> 03-08-2005 <br> 03-12-2004 <br> 30-10-2003 <br> 13-11-2003 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201310198812